# FASCICULE DE BREVET EUROPEEN

(11) **EP 0 992 128 B1**
(45) Date de publication et mention de la délivrance du brevet: **11.09.2002**
(21) Numéro de dépôt: 98933718.3
(22) Date de dépôt: 25.06.1998
(51) Int. Cl.: H04B 7/204

(54) **SYSTEME DE TELECOMMUNICATION**
TELEKOMMUNIKATIONSANORDNUNG
TELECOMMUNICATION SYSTEM

(30) Priorité: 26.06.1997 FR 9708013
(43) Date de publication de la demande: 12.04.2000
(73) Titulaire: ALCATEL, 75008 Paris (FR)
(72) Inventeur: CROQ, Frédéric, F-31170 Tournefeuille (FR); DOLMETA, Florence, F-31270 Cugnaux (FR); VOISIN, Philippe, F-31170 Tournefeuille (FR); CASASOPRANA, Didier, F-78100 Saint Germain en Laye (FR)
(74) Mandataire: Lamoureux, Bernard
(86) Numéro de dépôt international: FR9801346
(87) Numéro de publication internationale: WO99000916

(56) Documents cités:
- EP-A- 0 624 008
- US-A- 5 594 941
- E. A. OHM: "Multifixed-beam satellite antenna with full area coverage and a rain-tolerant polarization distribution" IEEE TRANSACTIONS ON ANTENNAS AND PROPAGATION., vol. 29, no. 6, novembre 1981, pages 937-941, XP002062407 NEW YORK US

## Description

La présente invention est relative à un système de télécommunication permettant des débits d'information importants et des temps de propagation minimisés.

Pour la communication à haut débit entre stations ou mobiles terrestres se trouvant dans une zone géographique déterminée d'une étendue de plusieurs centaines de kilomètres, il est proposé d'utiliser un système à réseau de satellites à orbite basse, par exemple dont l'altitude se situe entre 1000 et 1500 km. Dans ce système chaque satellite comporte des groupes d'antennes de réception et d'émission, chaque groupe étant dédié à une zone donnée. Dans chaque groupe, les antennes de réception reçoivent les signaux provenant d'une station dans la zone et les antennes d'émission réémettent les signaux reçus vers une autre station dans la même zone. Pendant le déplacement du satellite les antennes d'un groupe restent constamment orientées vers la zone tant que celle-ci reste dans le champ de vision du satellite. Ainsi, pour un satellite, une région de la terre est divisée en n zones et quand il se déplace au-dessus d'une région, à chaque zone est affecté un groupe d'antennes d'émission et de réception qui restent constamment orientées vers cette zone.

Des documents de l'art antérieur enseigne une antenne adapté au système de télécommunications via satellite tel que décrit dans le paragraphe précédent. Citons par exemple les deux documents D1 = EP A 0 624 008, et D2 = E.A.Ohm, « Multifixed beam satellite antenna with full area coverage and a rain tolerant polarization distribution », dans IEEE Transactions on Antennas and Propagation, vol. 29, no. 6, novembre 1981, pp 937-941.

De cette manière, pendant le déplacement - par exemple d'une durée d'une vingtaine de minutes - du satellite au-dessus d'une région, un seul groupe d'antennes d'émission et de réception étant affecté à la zone, on évite des commutations d'une antenne à une autre qui pourraient être dommageables à la rapidité ou la qualité de la communication.

Par ailleurs, la basse altitude des satellites minimise les temps de propagation, ce qui est favorable à des communications de type interactif, notamment pour des applications dites "multimédias".

L'invention vise à optimiser la réalisation des équipements à bord des satellites ainsi que dans les diverses zones.

Pour optimiser la réalisation du système de télécommunication, l'invention prévoit une méthode d'allocation de ressources pour un système de télécommunications selon la revendication 1, qui prévoit de séparer les zones en au moins deux catégories. La première catégorie est constituée de zones où le besoin en communications, ou trafic, est inférieur à un seuil et la seconde catégorie est constituée de zones où le besoin est supérieur ou égal au seuil. Dans les zones de la première catégorie (trafic faible), on choisit l'état de polarisation et les fréquences porteuses des signaux reçus et émis dans chaque zone de façon telle qu'à deux zones adjacentes soient affectés des signaux ayant des états de polarisation ou de fréquences porteuses différents. Dans les zones de la seconde catégorie (trafic intense) à chaque zone sont affectés des signaux ayant tous les états de polarisation et toutes les fréquences porteuses disponibles.

Ainsi des ressources limitées sont affectées aux zones de la première catégorie et toutes les ressources en signaux sont affectées aux zones de la seconde catégorie.

La polarisation est soit circulaire soit linéaire.

Ce procédé permet d'adapter la réalisation des équipements aux besoins. En particulier les équipements pour les zones à trafic faible pourront être de réalisation simple. Ainsi, les contraintes imposées aux antennes d'émission et de réception à bord d'un satellite, ou d'un véhicule spatial, qui sont affectées à des zones à faible trafic seront moins sévères que les contraintes imposées aux antennes prévues pour les zones de trafic intense.

On a constaté que les zones à trafic intense ne représentent, dans chaque région, qu'environ 25% du nombre total de zones, alors qu'elles supportent 40 à 50 % du trafic total.

A bord des satellites, les antennes d'émission et de réception affectées aux zones à faible trafic sont, par exemple, des antennes actives, c'est-à-dire des antennes dont le diagramme de rayonnement est formé et orienté uniquement par une commande électronique. La forme de ce diagramme est également modifiée par une commande électronique. Il est à noter que cette modification de forme de diagramme, qui est spécifique au domaine des télécommunications, est rendue nécessaire par le fait que la forme du rayonnement émis vers le sol varie avec la position relative du satellite par rapport à la zone. Par exemple si la zone à couvrir au sol est circulaire le satellite au nadir de cette zone "voit" une zone circulaire. Par contre quand le satellite s'éloigne de cette position il voit la zone sous forme elliptique.

Pour des zones à trafic intense, on utilisera, par exemple, des antennes orientables mécaniquement qui sont associées à des moyens, de préférence électroniques, pour modifier le diagramme de rayonnement en fonction de l'orientation, c'est-à-dire pour adapter le diagramme de rayonnement à la forme sous laquelle l'antenne voit la zone.

D'autres caractéristiques et avantages de l'invention apparaîtront avec la description de certains de ses modes de réalisation, celle-ci étant effectuée en se référant aux dessins ci-annexés sur lesquels :
la figure 1 est un schéma montrant un système de télécommunication entre stations ou mobiles terrestres faisant appel à un système de satellites,
la figure 2 est un schéma illustrant une répartition de trafics dans le cadre du système, selon l'invention,
la figure 3 est un schéma montrant un circuit de commande d'une antenne pour satellite d'un système, selon l'invention,
la figure 4 est un schéma d'une antenne commandée par le circuit de la figure 3,
la figure 5 est un schéma d'une antenne d'émission et de réception montée à bord d'un satellite du système, selon l'invention, et destinée à une zone à trafic intense,
la figure 5a est un schéma d'un panneau rayonnant,
la figure 6 est un schéma montrant la commande d'une antenne d'émission de la figure 5,
la figure 7 est un schéma montrant la commande d'une antenne de réception de la figure 5, et
la figure 8 est un schéma montrant l'ensemble des antennes montées à bord d'un satellite du système, selon l'invention.

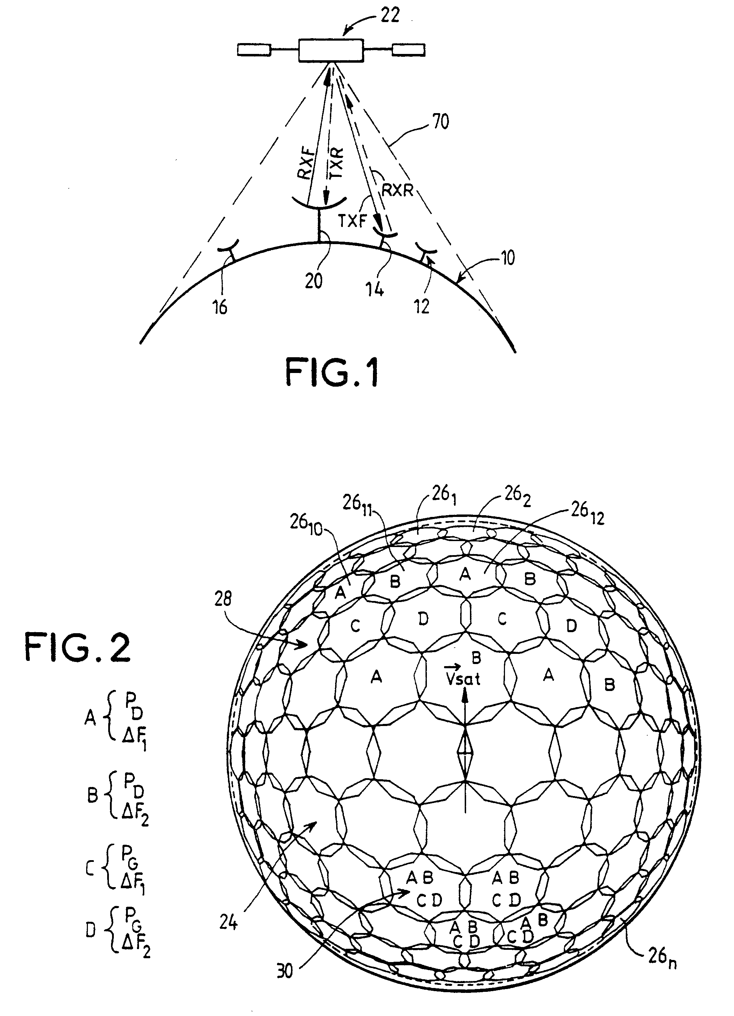

L'exemple que l'on va décrire concerne un système de télécommunication faisant appel à une constellation de satellites à orbite basse, environ 1300 Km au-dessus de la surface 10 (figure 1) de la terre.

Le système doit établir des communications entre des utilisateurs 12, 14, 16 par l'intermédiaire d'une ou plusieurs station(s) de connexion 20. Il établit également des communications entre utilisateurs et des fournisseurs de service (non montrés) reliés à une station de connexion. Ces communications sont réalisées par l'intermédiaire d'un satellite 22.

Dans les communications entre, d'une part, les utilisateurs 12, 14, 16 et la station de connexion 20 et, d'autre part, le satellite 22, il existe quatre types de signaux, à savoir :
les signaux TXF du satellite 22 vers les utilisateurs, les signaux RXR des utilisateurs 12, 14, 16 vers le satellite 22, les signaux TXR du satellite 22 vers la station de connexion 20 et
les signaux RXF de la station de connexion vers le satellite 22. A toutes fins utiles, on indique ici que le suffixe F signifie "forward" ou aller (de la station de connexion vers l'utilisateur) et R signifie "return" ou retour (de l'utilisateur vers la station de connexion). Par ailleurs, de façon classique, TX signifie "émission" et RX signifie "réception". Ici on définit l'émission et la réception par rapport au satellite.

Dans le système, à chaque instant le satellite 22 voit une région 24 de la terre (figure 2) et cette région est divisée en zones 26₁, 26₂...26ₙ. Dans un exemple, chaque région 24 comporte 36 zones (n = 36).

Chaque zone 26ᵢ a la forme d'un cercle d'un diamètre d'environ 700 km. Chaque région 24 est délimitée par un cône 70 centré sur le satellite et d'un angle au sommet déterminé par l'altitude du satellite. Une région est ainsi la partie de la terre visible depuis le satellite. Quand l'altitude du satellite est de 1300 km, l'angle au sommet est de 104° environ.

Le satellite comporte des groupes d'antennes d'émission et de réception affectés à chaque zone 26. Chaque groupe est tel que, lorsque le satellite se déplace, ce groupe reste pointé vers la même zone. Autrement dit le diagramme de rayonnement de chaque antenne reste toujours dirigé vers une même zone terrestre 26ᵢ, en principe tant que le satellite voit cette zone.

Le besoin en antennes est au maximum de 4n : quatre types de signaux par zone. Toutefois, l'invention prévoit, comme on le verra plus loin, que le nombre total d'antennes est sensiblement inférieur à 4n.

Le satellite sert à la communication entre utilisateurs et entre utilisateurs et la station de connexion à l'intérieur de chaque zone 26ᵢ. Par contre, la communication entre zones est effectuée à l'aide de moyens terrestres, par exemple à l'aide de câbles disposés entre les stations de connexion des diverses zones faisant partie d'une même région ou de régions différentes.

Le nombre et la disposition des satellites sont tels qu'à chaque instant, une zone 26ᵢ voit deux ou trois satellites. De cette manière, quand une zone 26ᵢ sort du champ de vision du satellite affecté aux communications dans cette zone il reste un satellite pour prendre le relais et la commutation d'un satellite à l'autre s'effectue de façon instantanée. Toutefois, une telle commutation intervient peu fréquemment, par exemple, toutes les vingt minutes environ, car une antenne reste toujours pointée vers une même zone. En pratique cette commutation se produit quand, pour la zone 26ᵢ en question, l'élévation du satellite descend au-dessous de 10°.

Selon un premier aspect de l'invention, on prévoit, dans une région 24, au moins deux catégories de zones correspondant à des besoins en trafic différents. Le besoin en trafic se mesure, par exemple, par la quantité moyenne d'informations qui est transmise par unité de temps et par unité de surface.

Ainsi, dans une partie 28 de la région 24 (figure 2) le trafic est peu intense, tandis que dans une autre partie 30 le trafic est intense. Un trafic intense correspond, par exemple, à des zones urbaines d'un pays développé, tandis qu'un trafic faible correspond, par exemple, à des zones rurales ou peu développées.

Dans la partie 30 à trafic intense à chaque zone on affecte l'ensemble des ressources A, B, C, D en signaux.

Par "ressources en signaux" on entend une caractéristique de polarisation et une caractéristique de bande de fréquences porteuses.

Dans l'exemple la polarisation est soit de type circulaire droit (P_{D}), soit de type circulaire gauche (P_{G}) et on prévoit deux bandes séparées de fréquences porteuses : ΔF₁ et ΔF₂.

Comme on peut le voir sur la figure 2 : A signifie un signal de polarisation circulaire droite P_{D}, et une bande de fréquences ΔF₁ ; B signifie une polarisation circulaire droite P_{D} et une bande de fréquences ΔF₂ ; C correspond à une polarisation circulaire gauche P_{G} et une bande de fréquences ΔF₁ et D à une polarisation circulaire gauche P_{G} et une bande de fréquences ΔF₂.

Ainsi, dans la partie 30 à trafic intense, à chaque zone est affecté l'ensemble des ressources A, B, C et D.

Par contre, dans la partie 28 de faible trafic, à chaque zone est affectée une seule ressource A, B, C ou D. En outre, la répartition des ressources en signaux est telle que deux zones adjacentes ne contiennent pas des ressources identiques. Les zones auxquelles est affectée la même ressource sont séparées par au moins une zone où la ressource est différente. Ainsi, la zone 26₁₀ de ressource A (signal de polarisation circulaire droite P_{D} et bande ΔF₁) est séparée de la zone 26₁₂ comportant la même ressource, par la zone 26₁₁ à laquelle est affectée la ressource B (polarisation circulaire droite P_{D}, mais bande de fréquences ΔF₂).

Il est à noter que les bandes de fréquences porteuses ΔF₁ et ΔF₂ sont soit de même étendue, soit d'une étendue différente. Par exemple si, dans la partie 28, certaines zones nécessitent un trafic plus important que d'autres zones, la bande de fréquences porteuses ΔF₂ sera plus importante que la bande de fréquences porteuses ΔF₁.

Cette séparation de la région 24 en zones à faible trafic et en zones à trafic intense permet, comme on le verra plus loin, d'optimiser les équipements à bord du satellite 22.

Dans une zone telle que celle de référence 26₁₀, les antennes peuvent être réalisées de façon telle qu'elles puissent recevoir ou émettre seulement des signaux à polarisation circulaire droite P_{D}. On peut ainsi utiliser des équipements simplifiés. Par contre, dans les zones de la partie 30, les systèmes d'antenne doivent être capables d'engendrer les deux polarisations circulaires (droite et gauche), sans interférence entre les signaux.

En ce qui concerne les contraintes pour les équipements à bord du satellite 22, on comprend que chaque antenne suit une zone et doit effectuer un balayage selon un angle compris entre 100° et 120° depuis l'entrée de la zone dans le champ de vision du satellite jusqu'à sa sortie. En outre, la forme du diagramme de rayonnement doit varier au cours du déplacement du satellite car, pour l'antenne, une zone qui se trouve à la verticale du satellite est vue sans déformation, c'est-à-dire comme un cercle, mais une zone se trouvant en bord de région, par exemple la zone 26₁ ou 26₂, est vue sous la forme d'une ellipse allongée de plus faibles dimensions. Comme toutes les possibilités de communication doivent être conservées pour chaque zone au cours du déplacement du satellite dans la région, il est donc nécessaire d'agencer les antennes pour qu'elles effectuent le balayage nécessaire et contrôlent les diagrammes de rayonnement en fonction de la direction visée.

Pour atteindre ce résultat dans le mode de réalisation décrit, aux zones à faible trafic on affecte des antennes actives, c'est-à-dire des antennes qui sont pointables et reconfigurables de façon électronique et aux zones à trafic intense on affecte des antennes orientables mécaniquement et reconfigurables électroniquement.

Les antennes actives permettent, d'une part, des dépointages importants et, d'autre part, la formation de plusieurs faisceaux indépendants. Toutefois, la qualité d'isolation entre zones adjacentes se dégrade pour les dépointages importants. Les antennes actives sont donc mal adaptées aux zones à fort trafic. Par contre la répartition choisie des ressources en signaux pour les zones à faible trafic permet de s'accommoder de la qualité moyenne d'isolation. Par ailleurs, un panneau d'éléments rayonnants permettant d'adresser simultanément plusieurs faisceaux, le choix des antennes actives est bien adapté aux zones à faible trafic dont le nombre est très important (par exemple 24), ce qui est favorable à la diminution de la masse embarquée sur chaque satellite.

Les antennes orientables mécaniquement et reconfigurables électroniquement qui sont affectées aux zones à trafic intense permettent le meilleur isolement entre zones adjacentes du fait du pointage mécanique. Toutefois une antenne de ce type ne peut être affectée qu'à une seule zone. Il est donc nécessaire de prévoir au moins autant d'antennes de ce type qu'il existe de zones à trafic intense. A ce sujet, on notera que les zones à densité intense ne représentent qu'environ 25 % du total du nombre total de zones, ce qui limite le nombre des antennes nécessaires.

Par exemple on prévoit, par région, huit à douze zones ayant un trafic intense et seize à vingt-quatre zones un faible trafic.

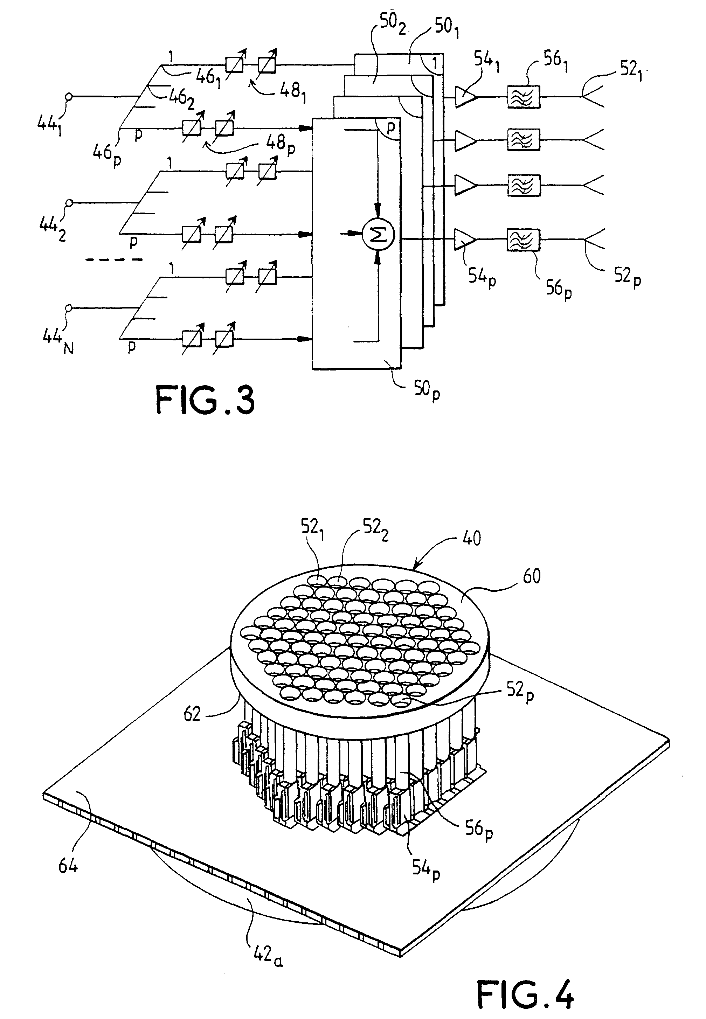

Comme indiqué ci-dessus, un même panneau d'éléments rayonnants 40 (figure 4) d'une antenne active à bord du satellite 22 est utilisable pour émettre (ou recevoir) des signaux affectés à plusieurs zones 26₁₀, 26₁₁... à faible trafic. En outre, ce même panneau d'éléments rayonnants peut être affecté à plusieurs types de signaux.

Ainsi, dans l'exemple représenté sur la figure 3 un même panneau de p éléments rayonnants 52₁...52ₚ est utilisé pour l'émission de signaux vers N zones à faible trafic.

Les circuits 42 représentés sur la figure 3 comportent ainsi N entrées 44₁, 44₂...44_{N}, chacune recevant un signal TXF (ou TXR) affecté à une zone.

Le signal appliqué sur une entrée 44ᵢ, par exemple celle de référence 44₁, est délivré aux entrées 46₁, 46₂...46ₚ de circuits 48₁, 48₂...48ₚ d'atténuation d'amplitude a et de variation de phase φ. Chaque signal délivré à un tel circuit 48ᵢ de commande d'amplitude et de phase est destiné à un élément rayonnant 52ᵢ. Les circuits de commande 48ᵢ permettent de transmettre les signaux appliqués sur l'entrée 44₁, 44₂... vers la zone correspondante.

Les N signaux affectés à un même élément rayonnant 52ᵢ sont appliqués sur une entrée respective d'un sommateur 50ᵢ et la sortie de chaque sommateur est connectée à l'élément rayonnant correspondant 52ᵢ par l'intermédiaire d'un amplificateur 54ᵢ et d'un filtre passe bande 56ᵢ. Dans le cas de l'émission, les amplificateurs 54 sont des amplificateurs de puissance à état solide (SSPA) et dans le cas de la réception ces amplificateurs sont du type à faible bruit (LNA).

Dans un mode de réalisation, le nombre N, c'est-à-dire le nombre de zones pour lesquelles on utilise la même antenne d'émission (ou réception), est compris entre six et huit.

L'attribution d'un panneau d'éléments rayonnants 40 à plusieurs zones permet d'optimiser les circuits d'alimentation. Par exemple, la puissance de chaque amplificateur 54 ne sera pas égale à N fois la puissance maximale prévue pour chaque zone mais pourra être inférieure car les signaux ne sont, en pratique, jamais simultanément à leurs puissances maximales.

La figure 4 représente un exemple d'implantation physique d'un panneau 40 d'éléments rayonnants 52₁, 52₂... Le panneau 40 a la forme générale d'un disque avec une face rayonnante 60 et une face arrière 62. Cette dernière reçoit les filtres 56ᵢ qui sont des guides d'ondes ayant une forme générale extérieure de cylindres ou de tubes. Ces filtres sont connectés, par leurs extrémités opposées, aux amplificateurs 54ᵢ.

Les amplificateurs 54ᵢ sont associés à un panneau 64 à l'intérieur duquel est prévu un réseau de microcaloducs destinés à évacuer la chaleur résultant du fonctionnement de ces amplificateurs 54ᵢ. Le reste du circuit 42, avec les éléments 48ᵢ de commande d'amplitude et de phase et les sommateurs 50ᵢ, est disposé sous le panneau 64, à l'opposé du panneau 40.

Les dimensions du panneau 40 sont choisies en fonction, d'une part, des dimensions de chaque zone et, d'autre part, de l'angle maximum de dépointage. Le dépointage étant l'inclinaison de la direction centrale du diagramme de rayonnement par rapport à la normale au panneau 40, l'angle maximum de dépointage est le demi-angle au sommet du cône 70 (figure 1) sous lequel le satellite 22 voit la terre 10. Ce dépointage étant au maximum de l'ordre de 50 à 60°, il faut choisir une aire de panneau 40 égale à quatre fois environ l'aire qui serait nécessaire pour émettre vers une zone se trouvant au droit du panneau, afin de tenir compte de la surface projetée de l'antenne dans la direction de pointage et de la caractéristique axisymétrique des performances de l'antenne active.

Par ailleurs, la distance entre éléments rayonnant 52ᵢ devra être choisie avec un pas suffisamment faible pour éviter l'apparition, sur la zone utile à terre, des lobes perturbateurs appelés lobes de réseau. Dans le cas d'une maille hexagonale, le pas doit être de l'ordre de 0,55 à 0,6 λ, λ étant la longueur d'onde du signal à émettre par l'antenne. Le pas est fonction du dépointage maximum.

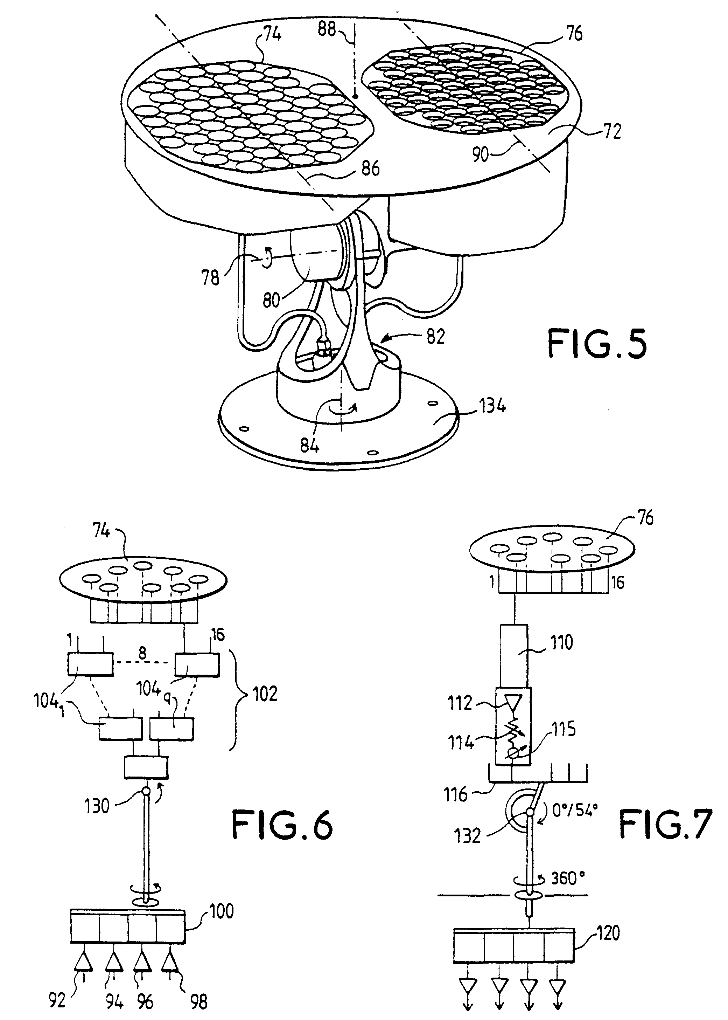

La figure 5 représente une antenne destinée aux zones à trafic intense. Elle permet l'émission et la réception.

Cette antenne comporte un plateau 72 logeant deux panneaux d'éléments rayonnants, respectivement 74 et 76. Le panneau 74 est destiné à l'émission tandis que le panneau 76 est destiné à la réception.

Le plateau support 72 qui, sur la figure 5, est représenté en direction horizontale, est pivotant autour d'un axe horizontal 78, parallèle au plan du plateau 72, grâce à un moteur 80 appelé moteur d'élévation, le pivotement autour de l'axe 78 effectuant l'orientation en élévation.

Par ailleurs, un autre moteur 82, d'axe vertical 84, est prévu sous le moteur 80. La rotation autour de l'axe 84 permet l'orientation en azimut.

Le panneau 74 d'éléments rayonnants destinés à l'émission a une forme générale elliptique de grand axe 86. Cette forme elliptique correspond à la forme sous laquelle l'antenne voit une zone proche de l'horizon, quand cette antenne est pointée vers cette zone, c'est-à-dire quand l'axe 88 vertical du plateau 72 est dirigé vers la zone en bord d'horizon.

De façon plus précise la forme elliptique est adaptée à la forme d'une zone à couvrir correspondant à un angle de pointage de 50° environ alors que l'angle maximum de pointage est de 54°. L'axe 86 est perpendiculaire au grand axe de l'ellipse sous laquelle une zone est vue pour un tel pointage de 50°.

Dans la description qui précède on comprend que les directions verticale et horizontale ont été mentionnées pour illustrer les directions relatives des divers éléments mais non pour indiquer une orientation absolue.

Le panneau 76 destiné à la réception a, comme le panneau 74, la forme générale d'une ellipse de grand axe 90, parallèle au grand axe 86 du panneau 74.

Le panneau 74 est destiné à la fois aux signaux TXF et aux signaux TXR. De même le panneau 76 est destiné aux signaux RXF et RXR.

La figure 6 est un schéma d'un circuit de commande destiné au panneau d'émission 74. Dans cet exemple on prévoit trois sous-bandes de fréquences porteuses destinées aux signaux TXF (émission vers les utilisateurs) et une seule bande de fréquences porteuses pour les signaux TXR (vers la station de connexion). Ainsi, trois amplificateurs 92, 94 et 96 sont affectés aux signaux TXF et un amplificateur 98 est prévu pour les signaux TXR.

Bien entendu, le circuit de la figure 6 n'est pas limité à cette répartition en trois sous-bandes pour les signaux TXF et une bande pour les signaux TXR. D'autres répartitions sont possibles telles que deux bandes pour les signaux TXF et deux bandes pour les signaux TXR.

Les sorties des amplificateurs 92 à 98 sont appliquées aux entrées d'un multiplexeur 100 qui délivre des signaux aux éléments rayonnants du panneau 74 par l'intermédiaire d'un circuit ou réseau 102 formateur de faisceaux.

Selon une caractéristique de l'invention, ce réseau 102 adapte le diagramme de rayonnement à la position du satellite par rapport à la zone à laquelle est affectée l'antenne. Autrement dit, à chaque instant l'axe 88 est dirigé vers la zone correspondante, grâce au moteur d'azimut 82 et au moteur d'élévation 80 (figure 5), et à cette direction de pointage "mécanique" correspond une commande électronique 102 de façon à adapter le faisceau à la position relative de l'antenne et de la zone.

Le faisceau est de section circulaire quand le satellite est au nadir de la zone et il est de section elliptique quand la zone est en bord d'horizon (figure 2). A cet effet, en particulier pour l'émission, lorsque l'antenne est au nadir, on alimente seulement les éléments rayonnants qui sont répartis selon un cercle ; lorsque le satellite quitte le nadir de la zone, la commande des amplitudes des signaux fournis aux éléments rayonnants émetteurs met en action, au fur et à mesure, d'autres éléments rayonnants, le nombre d'éléments rayonnants activés étant maximum quand l'antenne s'apprête à quitter la zone de vision de la zone.

Le circuit 102 comporte, dans l'exemple, q répartiteurs de puissance 104₁ à 104_{q}. Ces répartiteurs sont reconfigurables ; ils sont aussi à faibles pertes car ils sont situés après les amplificateurs 92 à 98.

Les répartiteurs de puissance 104ᵢ affectent l'amplitude des signaux fournis aux éléments rayonnants du panneau 74 mais non leur phase. En effet les éléments rayonnants n'interviennent pas pour le pointage ; il n'est donc pas nécessaire de faire varier la phase des signaux qui leur sont appliqués.

Par ailleurs, on a constaté qu'il n'était pas nécessaire de commander individuellement l'amplitude de chaque élément rayonnant. C'est pourquoi, dans une réalisation le nombre q de répartiteurs de puissance est un sous multiple du nombre d'éléments rayonnants. Dans l'exemple le nombre d'éléments rayonnants est de 64 ou 80 tandis que le nombre q est de 16.

Cette simplification résulte de l'observation que le diagramme de rayonnement est axisymétrique par rapport à la direction de pointage mécanique du panneau. Dans ces conditions les éléments rayonnants situés à une même distance du centre du panneau sont excités à un même niveau d'amplitude et peuvent donc être excités de la même manière, c'est-à-dire par les mêmes composants.

La figure 5a montre un exemple de panneau d'éléments rayonnants disposés selon une forme allongée. Chaque élément rayonnant est représenté par un cercle 140. A l'intérieur de chaque élément rayonnant on a indiqué un numéro, ou indice, de 1 à 16. Les numéros identiques correspondent à une excitation de même niveau d'amplitude. Ainsi, par exemple, les quatre éléments d'indice 1 au centre sont tous excités avec la même amplitude. Par ailleurs, sur cette figure 5a, on observe, de façon générale, que les éléments rayonnants sont répartis selon quatre quadrants 152, 154, 156 et 158 excités de la même manière.

La figure 7 représente le circuit destiné à exploiter les signaux reçus par le panneau d'éléments rayonnants 76 affectés à la réception.

Ce circuit comporte des filtres 110, des amplificateurs 112 à faible bruit des atténuateurs variables 114 et des déphaseurs variables 115. Le rôle des atténuateurs 114 et des déphaseurs 115 est le même que celui des atténuateurs 104 de la figure 6 à savoir adapter le diagramme de rayonnement à la position relative du satellite par rapport à la zone. L'utilisation de déphaseurs à la réception permet d'optimiser la formation du faisceau ; elle ne pénalise pas le bilan de liaison car les déphaseurs se trouvent en aval des amplificateurs 112 à faible bruit.

Également comme dans le cas de la figure 6, les atténuateurs 114 et déphaseurs 115 sont commandés en fonction de la position relative du satellite par rapport à la zone.

Par ailleurs, un combineur passif 116 effectue la somme des signaux fournis par les atténuateurs 114 et déphaseurs 115.

Les signaux de sortie du combineur 116 sont fournis à un multiplexeur 120 qui sépare les signaux RXF et RXR. Dans l'exemple, on prévoit trois bandes de signaux RXF et une bande de signaux RXR de façon analogue à ce qui est prévu dans l'exemple de la figure 6. Bien entendu, également comme dans l'exemple de la figure 6, la répartition entre les bandes pour les signaux RXF et RXR peut être différente.

Il est à noter que, comme représenté sur les figures 5, 6 et 7, les câbles ou conducteurs électriques passent à travers un joint tournant 130, 132 et que ces câbles sont soumis à des rotations correspondant aux réglages en élévation et en azimut.

La reconfiguration du diagramme de rayonnement en fonction de l'élévation est assurée par un réseau formateur de faisceaux à base de ferrite ou de MMIC (circuit intégré monolithique pour les micro-ondes, "Monolithic Microwave Integrate Circuit" en langue anglaise). Pour l'antenne d'émission, on utilise de préférence un circuit à base de ferrite, un tel circuit étant mieux adapté à une formation de faisceaux à faibles pertes après l'amplification de puissance. Cette amplification de puissance est réalisée à l'aide d'amplificateurs SSPA qui présentent un faible rendement et dissipent donc une quantité importante de chaleur. Il est donc préférable d'éloigner ce circuit du panneau 72 qui, en général, dispose de peu de moyens de dissipation thermique ; ce circuit est donc installé sous le panneau 134 dit "de terre" (figure 5) toujours orienté vers le centre de la terre et qui dispose de moyens de dissipation thermique plus importants.

Le réseau formateur de faisceaux est, pour la réception, en technologie MMIC. Les amplificateurs à faible bruit sont disposés à proximité du panneau rayonnant pour minimiser les pertes ohmiques dues aux connexions.

Le pointage mécanique du plateau 72 est, par rapport à un pointage électronique, particulièrement avantageux car il n'est pas nécessaire de surdimensionner les panneaux d'éléments rayonnants 74 et 76.

L'absence de pointage électronique permet d'utiliser au mieux les ressources des signaux pour former les faisceaux sur une large bande passante. En particulier, l'absence de pointage électronique entraîne l'absence de dispersion en fréquence qui est liée à l'absence de pente de phase pour le pointage.

Le pas du réseau d'éléments rayonnants peut être de l'ordre de 0,9 λ. On évite ainsi aisément la formation de lobes de réseau. En outre, cette distance entre éléments rayonnants adjacents facilite l'implantation des divers éléments de commande et limite le couplage. Par ailleurs, pour une taille donnée de panneaux 74, 76, par rapport à une antenne active pour laquelle le pas du réseau est d'environ 0,6 λ, le nombre d'éléments rayonnants est réduit, ce qui limite les contrôles et le coût.

Le pointage mécanique du panneau sur la zone utile permet de limiter à ±12° la zone utile du diagramme élémentaire dans laquelle les signaux sont émis par un panneau d'éléments rayonnants. De cette manière, dans une zone, on peut isoler correctement les signaux à polarisation circulaire droite des signaux à polarisation circulaire gauche et, ainsi, réaliser une isolation de polarisation supérieure à 20 dB.

L'utilisation d'un réseau formateur de faisceaux à ferrite à l'émission, permet d'adapter la surface utile de l'antenne au diagramme à réaliser.

On obtient ainsi un diagramme toujours gaussien et les lobes secondaires sont d'un très bas niveau quels que soient la forme du diagramme et l'angle de pointage. Ainsi l'isolation entre zones adjacentes est optimale.

A l'émission on utilise une loi apodisée permettant d'éliminer les lobes secondaires et on s'affranchit des problèmes de fonctions de transfert différentiel des amplificateurs lorsque ces derniers fonctionnent en recul par rapport à leur point de fonctionnement nominal.

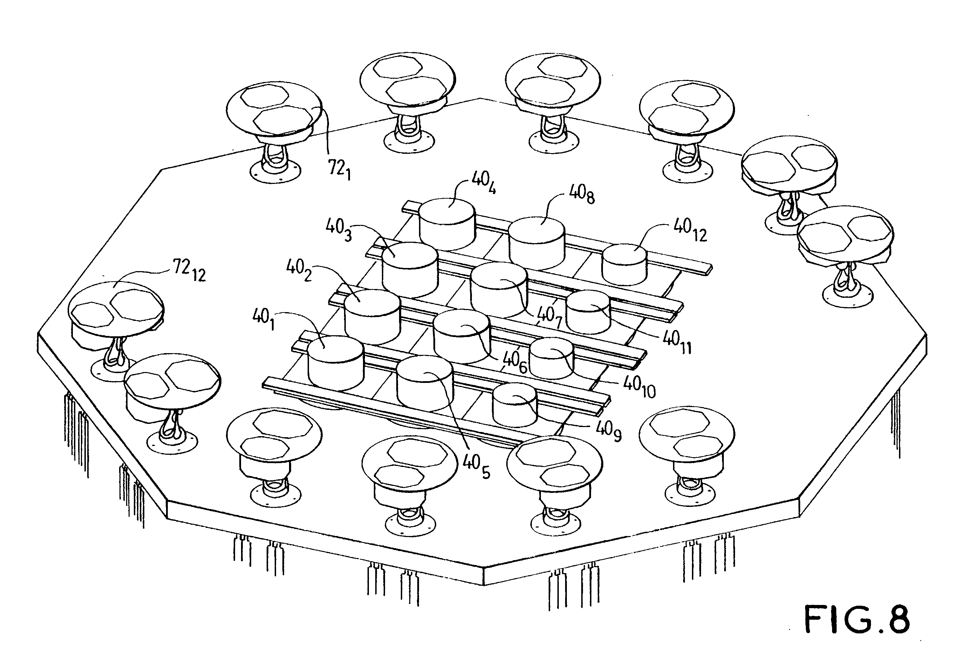

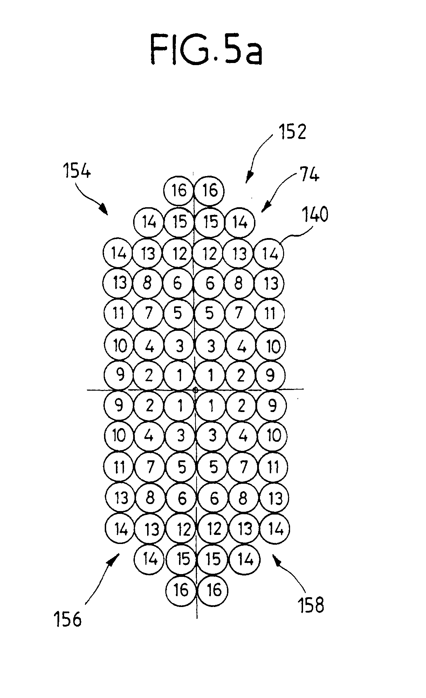

Sur la figure 8, on a représenté l'ensemble des antennes prévues dans le satellite 22, à savoir 12 antennes à plateau 72 orientables mécaniquement et reconfigurables électroniquement et 12 panneaux d'éléments rayonnants d'antennes actives, chaque panneau d'éléments rayonnants d'antenne active étant affecté à six zones.

Dans cet exemple quatre panneaux 40₁, 40₂, 40₃, 40₄ sont prévus pour les signaux TXF, et les panneaux 40₅ à 40₈ sont prévus pour les signaux TXR, tandis que les quatre panneaux restants 40₉ à 40₁₂ sont prévus pour les signaux RXR et RXF. Les liaisons TX sont séparées des liaisons RX pour permettre un filtrage qui évite le brouillage des signaux RX par les signaux TX. Les signaux TXF ne sont pas émis par les mêmes panneaux que les signaux TXR car leurs niveaux sont sensiblement différents : en effet vers les utilisateurs il faut émettre des signaux à des niveaux élevés car les antennes sont moins sensibles que celles des stations de connexion 20.

Par contre, on peut utiliser les mêmes panneaux de réception pour les signaux provenant des stations de connexion et des utilisateurs car en général il n'existe pas d'intermodulation entre les amplificateurs à faible bruit.

## Revendications

1. Méthode d'allocation de ressources pour un système de télécommunication dans lequel la terre est divisée en zones (26) à l'intérieur desquelles les communications s'effectuent par l'intermédiaire d'un moyen d'émission et de réception se trouvant dans un engin spatial (22), tel qu'un satellite, affecté à la communication pour une pluralité de zones, comprenant les étapes suivants :
• à des zones (26₁₀, 26₁₁, 26₁₂) d'une première catégorie (28) on affecte des signaux ayant un état de polarisation et des fréquences porteuses tels qu'à deux zones adjacentes de cette première catégorie soient affectés des signaux ayant des états de polarisation ou des fréquences porteuses différents, et
• dans chaque zone d'une seconde catégorie (30) on affecte des signaux ayant tous les états de polarisation et toutes les fréquences porteuses disponibles.

2. Méthode selon la revendication 1, **caractérisée en ce que** la polarisation des signaux est circulaire.

3. Méthode selon la revendication 1 ou 2, **caractérisée en ce qu'**on prévoit au moins deux bandes distinctes de fréquences porteuses pour les signaux, les étendues de ces bandes distinctes ayant des valeurs égales ou inégales.

4. Méthode selon l'une quelconque des revendications précédentes, **caractérisée en ce que** les zones de la première catégorie (28) sont affectées à des faibles densités de communication et **en ce que** les zones de la seconde catégorie (30) sont affectées à des densités de communication plus importantes.

5. Méthode selon l'une quelconque des revendications précédentes, **caractérisée en ce que** dans chaque zone les signaux sont émis et reçus par des utilisateurs (12, 14, 16) et par au moins une station de connexion (20).

6. Méthode selon la revendication 5, **caractérisée en ce que** la communication entre zones distinctes s'effectue à l'aide de liaisons de type terrestre entre stations de connexion (20).

7. Méthode selon l'une quelconque des revendications précédentes, **caractérisée en ce que** dans une zone de la première catégorie on prévoit des équipements d'émission et/ou de réception destinés à recevoir et/ou émettre seulement les signaux ayant la polarisation et/ou les fréquences prévue(s) pour cette zone.

8. Méthode selon l'une quelconque des revendications précédentes, **caractérisée en ce que** l'engin spatial est un satellite (22) à orbite basse dans lequel un dispositif d'émission et réception est prévu pour chaque zone, ce dispositif restant pointé vers la zone qui lui est associée tant que le satellite reste en vue de la zone.

9. Méthode selon la revendication 8, **caractérisée en ce que** , pour les zones de la première catégorie, ledit dispositif d'émission et réception comporte des antennes d'émission et/ou réception qui sont du type actif à pointage et reconfiguration électroniques.

10. Méthode selon la revendication 8, **caractérisée en ce que** , pour les zones de la seconde catégorie, ledit dispositif d'émission et réception comporte au moins une antenne d'émission et/ou réception qui comporte des moyens mécaniques de pointage de l'antenne vers la zone.

11. Méthode selon la revendication 10 , **caractérisée en ce que** le diagramme de rayonnement est modifié en fonction de la position relative de l'engin spatial (22) et de la zone correspondante, afin d'adapter ce diagramme à la forme sous laquelle l'antenne voit la zone.

12. Méthode selon la revendication 11 , **caractérisée en ce que** le diagramme de rayonnement est modifié, lors de l'émission par une antenne active à éléments rayonnants, la modification du diagramme étant obtenue par modification des amplitudes des signaux fournis aux éléments rayonnants.

13. Méthode selon la revendication 11 , **caractérisée en ce que** le diagramme de rayonnement est modifié, lors de la réception par une antenne active à éléments rayonnants, la modification du diagramme étant obtenue par modification des amplitudes et des phases des signaux fournis aux éléments rayonnants.

## Patentansprüche

1. Verfahren zur Ressourcenzuteilung für ein Fernmeldesystem, bei dem die Erde in Zonen (26) unterteilt ist, in denen die Kommunikationen über ein Sende- und Empfangsmittel stattfinden, das sich in einem Raumfahrzeug (22) wie etwa einem Satelliten befindet, der für die Kommunikation für eine Mehrzahl von Zonen eingeteilt ist, mit den folgenden Schritten:
in Zonen (26₁₀, 26₁₁, 26₁₂) einer ersten Kategorie (28) werden Signale mit einem solchen Polarisationszustand und solchen Trägerfrequenzen zugeteilt, dass zwei benachbarten Zonen dieser ersten Kategorie Signale mit verschiedenen Polarisationszuständen oder Trägerfrequenzen zugeteilt werden, und
in jeder Zone einer zweiten Kategorie (30) werden Signale mit allen Polarisationszuständen und allen verfügbaren Trägerfrequenzen zugeteilt.

2. Verfahren nach Anspruch 1, **dadurch gekennzeichnet, dass** die Polarisation der Signale zirkular ist.

3. Verfahren nach Anspruch 1 oder 2, **dadurch gekennzeichnet, dass** wenigstens zwei verschiedene Trägerfrequenzbänder für die Signale vorgesehen werden, wobei die Ausdehnungen dieser verschiedenen Bänder gleiche oder ungleiche Werte haben.

4. Verfahren nach einem beliebigen der vorhergehenden Ansprüche, **dadurch gekennzeichnet, dass** die Zonen der ersten Kategorie (28) niedrigen Kommunikationsdichten zugewiesen werden, und dass die Zonen der zweiten Kategorie höheren Kommunikationsdichten zugewiesen werden.

5. Verfahren nach einem beliebigen der vorhergehenden Ansprüche, **dadurch gekennzeichnet, dass** in jeder Zone die Signale von Benutzern (12, 14, 16) und von wenigstens einer Verbindungsstation (20) empfangen werden.

6. Verfahren nach Anspruch 5, **dadurch gekennzeichnet, dass** die Kommunikation zwischen verschiedenen Zonen mit Hilfe wandgestützter Verbindung zwischen Verbindungsstationen (20) stattfindet.

7. Verfahren nach einem beliebigen der vorhergehenden Ansprüche, **dadurch gekennzeichnet, dass** in einer Zone der ersten Kategorie Sende- und/oder Empfangseinrichtungen vorgesehen werden, die dazu bestimmt sind, nur die Signale mit der Polarisation und/oder den Frequenzen, die für diese Zone vorgesehen ist/sind, zu empfangen.

8. Verfahren nach einem beliebigen der vorhergehenden Ansprüche, **dadurch gekennzeichnet, dass** das Raumfahrzeug ein Satellit (22) in niedriger Umlaufbahn ist, in dem eine Sende- und Empfangsvorrichtung für jede Zone vorgesehen ist, wobei diese Vorrichtung auf die ihm zugeordnete Zone ausgerichtet bleibt, so lange der Satellit im Sichtbereich dieser Zone bleibt.

9. Verfahren nach Anspruch 8, **dadurch gekennzeichnet, dass** für die Zonen der ersten Kategorie die Sende- und Empfangsvorrichtung Sende- und/oder Empfangsantennen vom aktiven Typ mit elektronischer Ausrichtung und Rekonfiguration aufweist.

10. Verfahren nach Anspruch 8, **dadurch gekennzeichnet, dass** für die Zonen der zweiten Kategorie die Sende- und Empfangsvorrichtung wenigstens eine Sende- und/oder Empfangsantenne aufweist, die mechanische Mittel zum Ausrichten der Antenne auf die Zone umfasst.

11. Verfahren nach Anspruch 10, **dadurch gekennzeichnet, dass** das Strahlungsdiagramm in Abhängigkeit von der relativen Position des Raumfahrzeugs (22) und der entsprechenden Zone angepasst wird, um dieses Diagramm an die Form anzupassen, unter der die Antenne die Zone sieht.

12. Verfahren nach Anspruch 11, **dadurch gekennzeichnet, dass** das Strahlungsdiagramm beim Senden durch eine aktive Antenne mit strahlenden Elementen verändert wird, wobei die Veränderung des Diagramms erhalten wird durch Veränderung der Amplituden der an die strahlenden Elemente gelieferten Signale.

13. Verfahren nach Anspruch 11, **dadurch gekennzeichnet, dass** das Strahlungsdiagramm beim Empfang durch eine aktive Antenne mit strahlenden Elementen verändert wird, wobei die Veränderung des Diagramms erhalten wird durch Veränderung der Amplituden und der Phasen der an die strahlenden Elemente gelieferten Signale.

## Claims

1. A method of allocating resources for a telecommunications system in which the Earth is divided into areas (26) within which communications are effected by means of transmit and receive means on a spacecraft (22), such as a satellite, allocated to communication for a plurality of areas, the method comprising the following steps:
areas (26₁₀, 26₁₁, 26₁₂) of a first category (28) are allocated signals having respective polarizations and carrier frequencies such that two adjacent areas of the first category are allocated signals having different polarizations or carrier frequencies; and
· each area of a second category (30) is allocated signals having all the available polarizations and all the available carrier frequencies.

2. A method according to claim 1, **characterized in that** the polarization of the signals is circular.

3. A method according to claim 1 or claim 2, **characterized in that** at least two separate bands of carrier frequencies are provided for the signals, the widths of the separate bands being equal or unequal.

4. A method according to any of the preceding claims, **characterized in that** the areas of the first category (28) are allocated to low call densities and **in that** the areas of the second category (30) are allocated to higher call densities.

5. A method according to any of the preceding claims, **characterized in that** in each area the signals are transmitted and received by users (12, 14, 16) and by at least one connection station (20).

6. A method according to claim 5, **characterized in that** the separate areas communicate via terrestrial links between connection stations (20).

7. A method according to any of the preceding claims, **characterized in that** in an area of the first category transmit and/or receive equipment is provided for receiving and/or transmitting only signals having the polarization and/or the frequencies provided for that area.

8. A method according to any of the preceding claims, **characterized in that** the spacecraft is a satellite (22) in low Earth orbit in which a transmit-receive system is provided for each area and is pointed towards the area with which it is associated for as long as the satellite remains in view of the area.

9. A method according to claim 8, **characterized in that**, for areas of the first category, said transmit-receive system includes active transmit and/or receive antennas which employ electronic pointing and reconfiguration.

10. A method according to claim 8, **characterized in that**, for areas of the second category, said transmit-receive system includes at least one transmit and/or receive antenna which includes mechanical means for pointing the antenna towards the area.

11. A method according to claim 10, **characterized in that** the radiation pattern is modified as a function of the relative position of the spacecraft (22) and the corresponding area in order to match the pattern to the shape of the area as seen by the antenna.

12. A method according to claim 11, **characterized in that** the radiation pattern is modified during transmission by an active transmit antenna with radiating elements, and the pattern is modified by modifying the amplitudes of the signals fed to the radiating elements.

13. A method according to claim 11, **characterized in that** the radiation pattern is modified during reception by an active receive antenna with radiating elements, and the pattern is modified by modifying the amplitudes and the phases of the signals fed to the radiating elements.
